# EUROPEAN PATENT APPLICATION

(11) **EP 2 043 002 A1**
(43) Date of publication of application: **01.04.2009**
(21) Application number: 07291175.3
(22) Date of filing: 28.09.2007
(51) Int. Cl.: G06F 17/27

(54) **Method and computer program product for publishing a semantic service to a service registry**

(71) Applicant: Alcatel Lucent, 75008 Paris (FR)
(72) Inventor: Larvet, Philippe, c/o Alcatel Lucent, 75008 Paris (FR); Pastor, Alain, c/o Alcatel Lucent, 75008 Paris (FR); Christophe, Benoit, c/o Alcatel Lucent, 75008 Paris (FR); Larvet, Romain, c/o Alcatel Lucent, 75008 Paris (FR)
(74) Representative: Demulsant, Xavier

(57) **Abstract**

Method for publishing a semantic service to a service registry, this method comprising retrieving a service description, parsing the description of the existing service to obtain raw data, these raw data comprising input and output parameters of the service; choosing at least one existing service ontology; selecting from said existing service ontology at least one semantic domain addressed by the existing service in view of the raw data; annotating the raw data using natural language, characterized in that it comprises generating of patterns based on the correspondence between the concepts of said service ontology and raw data semantics and also on the correspondence between the concepts of said service ontology and natural language used for annotating raw data, these patterns enabling the generation of a semantic service specification, generating a service registry publication request based on this semantic service specification, said semantic service specification containing the references of the chosen service ontology and the chosen semantic domain.

## Description

### FIELD OF THE INVENTION

The invention relates on the Semantic Web, and more particularly to the Semantic Web services, a semantic approach to service discovery in the context of the Semantic Web.

### BACKGROUND OF THE INVENTION

The World Wide Web is acknowledged as one of the greatest inventions of the 20^{th} century. The Web is the greatest repository of information ever assembled by man. Its success has been built on its scalable architecture and the simplicity of its mechanisms for locating, browsing and publishing information. Web pages are hosted by numerous computers, where each document can point to other documents, either on the same or different computers. In the year 2000, estimates placed the number of web pages at over two billions.

Despite this great success, the first generation Web suffers from a number of limitations. Three of these limitations are briefly presented below.

First, the huge number of available Web pages makes it increasingly difficult for users to find and access required information or services. Although directories (such as Yahoo! ®) and search engines (such as Google ® or Alta Vista ®) can provide some assistance, locating the right document or service is for many users still like trying to find a needle in a haystack.

Secondly, users often want to use the Web to do more than just locate a document, they want to perform some task. For example, a user might want to find the best price, plan and book a vacation to some precise place, or make a reservation at a moderately-priced restaurant within some distance of the cinema he plans to go on a certain date. Completing these tasks often involves visiting a series of pages, integrating their content and reasoning about them in some way.

Thirdly, the Web was not designed to be processed by machines. Although web pages include information that tells a computer how to display a particular piece of text or where to go when a link is clicked, they do not provide any information that helps the machine to determine what the text means. While the Web suits humans well, the mark-up of content using HTML, which is essentially a language for rendering information on screen, provides little support for automatic analysis and aggregation of information and services. The content of current Web pages is expressed via natural language and therefore the semantics is not accessible for machines. Hence, an addition to the current Web is needed to make the semantics of the Web pages machine understandable.

To address these limitations the vision of a Semantic Web has been proposed. The expression "*Semantic Web*" came up in 1998 when Tim Berners-Lee published the Roadmap to the Semantic Web on the homepage of the W3C (see also T. Berners-Lee et al, Sci. Am. 279, 2001, pp.34-43).

In the Semantic Web, web resources are annotated and some languages have been developed for encoding and describing the Web content, e.g. RDF, RDF Schema, DAML+OIL, SHOE, OWL. Semantic mark-up are made using these knowledge representation languages.

Annotations can be used to express formal statements about web resources, external entities, and their relationships. Semantic Web annotations go beyond familiar textual annotations about the content of the documents, such as "*clause three of this license agreement has been amended*". This kind of informal annotation is common in word processor applications and is intended for use by document creators. Semantic annotation identifies concepts and relations between concepts in documents, and is intended primarily for use by machines. For example, a semantic annotation might relate "*polygalactouronase*" in a text to an ontology which both identifies it as the abstract concept "*enzyme*" and links it to the instance "*class EC 3.2.1.67*" of the systematic classification of the IUB (*International Union of Biochemistry*).

RDF (*Ressource Description Framework*) is a foundation for processing metadata; it provides interoperability between applications that exchange information on the Web (*D. Brickley et al, RDF Vocabulary Description Language 1.0: RDF Schema, World Wide Web Consortium, Recommendation REC-rdf-schema-2004*). RDF represents data using subject-predicate-object triples (also known as "statements"). This triple representation connects data in a flexible piece-by-piece and link-by-link fashion that forms a directed labeled graph. The components of each RDF statements can be identified using URI (*Uniform Resource Identifiers*).

DAML+OIL is a result of the efforts of the DAML (DARPA *Agent Markup Language*) and OIL (*Ontology Inference Layer*), the latest version of DAML+OIL having been released as a W3C recommendation under the name OWL (F. Van Harmelen IEEE intelligent system 2002 pp.70). The OWL recommendation of he W3C group consists of languages of expressive power such as OWL-Lite and OWL-DL (RDF Syntax) and OWL-Full.

OWL is quite a sophisticated language, having both a RDF/XML exchange syntax and an abstract frame-like syntax, and three names sublanguages.

In order to enable agent interoperability, annotations need to be based on some particular ontology.

Various definitions have been proposed for the term ontology, first used to describe the philosophical study of the nature and organization of reality. According to *Genesereth*, an ontology associates vocabulary terms with entities identified in the conceptualization and provides definitions to constrain the interpretations of these terms. In particular, it is a tuple <D, R>, where D is the domain of disclosure and R is a set of relations on D. *Guarino* suggests that a conceptualization should be an intentional structure <W, D, R>, where W is the set of possible worlds, D is the domain of discourse, and R is a set of intentional relations, an ontology being a logical theory accounting for the intended meaning of a formal vocabulary.

According to the most cited definitions of the Semantic Web literature, an ontology is an explicit specification of the conceptualization of a domain (T.R Grube,r Towards principles for the design of ontologies used for a knowledge sharing, Formal ontology in conceptual analysis and knowledge representation, Kluwer academic publishers; 1993). An ontology is a set of concepts regarding a given domain, gathering the concepts themselves and the relationships between these concepts. In short terms, an ontology is the formal representation of a structured dictionary dedicated to a given domain. In other words, ontologies are shared models of some domain encoding a view which is common to a set of different parties. Thus, ontologies differ from contexts that are not shared models that encode a party's view of a domain. Ontology based semantic annotations allow to resolve anomalies in searches, e.g. if a document collection was annotated using a geographical ontology, it would become easy to distinguish "Mississippi" State from "Mississippi" river, as they would be annotated with references to different concepts in the ontology.

A number of annotation tools for producing semantic markups exist: for instance *Amaya, Mangrove, Vannotea, OntoMat, Shoe, Smore, Open Ontology Forge, Cohse, Lixto, MnM, Melita, Parmenides, Amadillo, Knowitall, SmartWeb, Pankow, AeroSwarm, SemTag, Kim, WickOffice, AktiveDoc, SemanticWord, Magpie, Thresher*. Some of these tools include automation components which provide suggestions for annotations, but still require intervention by workers, and tools which acquire annotations automatically on a large scale. For example, the tool *Protégé-2000* supports the creation of ontologies for the semantic web. *Onto-Annotate* include tools for both manual and semi-automatic annotation of pages. *Annotea* provides RDF-based markup but does not support information extraction. AeroDAML produces semantically marked up pages which can be checked by humans.

A major limitation of the Web services technology is that finding and composing services still requires manual effort. In order to address this problem, semantic web researchers advanced the idea of a semantic description of the functionality of the services that could facilitate their discovery and integration. More precisely, Web services are semantically described in terms of concepts provided by a domain ontology. The concepts denote entities in the domain of the Web service as well as functionalities that can be performed by services in the given domain.

The purpose of *Semantic Web services* is to make service definition machine-understandable by describing their capabilities, inputs and outputs, constraints, as well as service choreography and orchestration in formal language. Indeed, the W3C Web Service Architecture Working Group defines a Web service as "*a software application identified by an URI, whose interfaces and bindings are capable of being defined, describes and discovered as XML artifacts*". Sufficiently rich, machine-readable descriptions of Web services would allow the creation of novel compound Web services with little or no direct human intervention.

Two main approaches are presently under development for Semantic Web services:
the definition of a formal conceptual model, as represented by OWL-S (*OWL service language*) and WSMO (*Web Service Modeling Ontology*). OWL-S is a set of ontologies for describing the properties and capabilities of Web services. The OWL-S process ontology provides a vocabulary for describing the composition of Web services, this ontology using an "action" or "process" metaphor for describing the service behavior;
the extension of a syntactical description formats by defining an annotation mechanism, as represented by SAWSDL or WSDL-S. WSDL-S can be used to provide semantic annotations that can be embedded into WSDL documents.

An example of a Web service description with WSDL (XML based *Web Service Description Language*) is given in Table 1. The WSDL document describes data type definitions in the XML element type and messages that a service sends and/or receives. WSDL provides a naming convention for URIs such that each conceptual element of a WSDL document can be uniquely referenced.

The WSDL document is primarily intended for use by a machine agent or a software engineer who has experience with web services. The WSDL language specifies the functionality and message of the service only at a syntactic level. While these descriptions can be automatically parsed and invoked by machines, the interpretation of their meaning is left to human programmers.

Using a WSDL Document Generator (e.g. see http://www.xmlspy.com) it is possible to generate a more attractive XHTML document. Annotation can be made manually by loading an ontology and aligning terminology mentioned in the Web page of the service by dragging and dropping it onto the loaded ontology. The result is a set of mapping rules between web services ontologies and preloaded ontology.

Using appropriate editor, it is then possible to write manually a semantic description of an existing service, in SAWSDL for example, and to include in this description some references to external ontologies.

This method has many drawbacks.

Firstly, final description is not produced automatically.

Secondly, this method is complicated and time consuming.

Thirdly, the internal contents of the documents used (e.g. XML and OWL/RDF notation) are visible to the user. The service developer has to describe manually the ontology of the service, e.g. with a tool like *Protégé*, a platform-independent environment for creating and editing ontologies and knowledge bases (Noy et al Creating semantic Web contents with Protégé-2000, IEEE Intelligent Systems, 2001, pp.60-71*).* In order to build step by step the final SAWSDL, the service developer has to drag-and-drop manually the classes of this ontology in the WSDL of the service, e.g. with a tool like *Radiant* (a plug in for *Eclipse*).

There is a need for means able to produce and attach semantic description to a large number of existing services, the use of such means avoiding knowledge of complicated languages (e.g. OWL) and avoiding the construction of complete ontologies.

### SUMMARY OF THE INVENTION

To this end, the invention relates, according to a first aspect, on a method for publishing a semantic service to a service registry, this method comprising retrieving a service description, parsing the description of the existing service to obtain raw data, these raw data comprising input and output parameters of the service; choosing at least one existing service ontology; selecting from said existing service ontology at least one semantic domain addressed by the existing service in view of the raw data; annotating the raw data using natural language, generating of patterns based on the correspondence between the concepts of said service ontology and raw data semantics and also on the correspondence between the concepts of said service ontology and natural language used for annotating raw data, these patterns enabling the generation of a semantic service specification, generating a service registry publication request based on this semantic service specification, said semantic service specification containing the references of the chosen service ontology and the chosen semantic domain.

Advantageously, parsing the description of the existing service is made using a WSDL parser.

Advantageously, at least one concept of said domain is attached to an input or output parameter of the existing service, e.g. using a graphic interface such as a formulary.

Advantageously, parsing the description of the existing service generates at least one phrase in natural language presenting the goal of the existing service.

Another object of the present invention is a computer program product comprising a computer usable medium having control logic stored therein for causing a computer to assist a user publishing a semantic service to a service registry, said control logic comprising :
- first computer readable program code for retrieving a service description;
- second computer readable program for parsing the description of the existing service to obtain raw data, these raw data comprising input and output parameters of the service;
- third computer readable program for choosing at least one existing service ontology;
- fourth computer readable program for selecting from said existing service ontology at least one semantic domain addressed by the existing service in view of the raw data;
- fifth computer readable program for annotating the raw data using natural language;
- sixth computer readable program for generating of patterns based on the correspondence between the concepts of said service ontology and raw data semantics and also on the correspondence between the concepts of said service ontology and natural language used for annotating raw data, these patterns enabling the generation of a semantic service specification,
- seventh computer readable program for generating publication request for the semantic service specification, said semantic service specification containing the references of the chosen service ontology and the chosen semantic domain.

Advantageously, the existing service is a Web service, the chosen ontology being based on a web ontology language such as OWL, the service registry being a universal description, discovery and integration registry (UDDI).

Another aspect of the invention is a communication system configured for invoking semantic services, said system including a computer as presented above and a distant web server including at least one service.

The above and other objects and advantages of the invention will become apparent from the detailed description of preferred embodiments, considered in conjunction with the accompanying drawings.

### BRIEF DESCRIPTION OF THE DRAWINGS

FIG. 1 is an example of formulary generated from WSDL before the annotations of the service developer;
Figure 2 is a formulary after annotations of the service developer: domain selection, parameter semantic attachment and goal completion;
Table 1 is an example of a WSDL description for a Web service;
Table 2 is an internal XML representation of the formulary given on figure 2;
Table 3 shows the generated ontology in OWL, corresponding to the formulary given on figure 2.

### DESCRIPTION OF PREFERRED EMBODIMENTS

An example of a Web service description with WSDL is given in Table 1. As can be seen from this Table 1, the WSDL document is primarily intended for use by a machine agent or a software engineer who has experience with web services. While this description can be automatically parsed and invoked by machines, the interpretation of their meaning is left to human programmers.

A WSDL parser extracts the useful data from the WDSL of the service. As an example, theses data are the service name, the operations names, the input and output parameters names and the parameters names.

The WSDL parser places these data into an empty formulary.

A phrase is automatically generated from the operation name and the parameters in order to describe succinctly the goal of the operation.

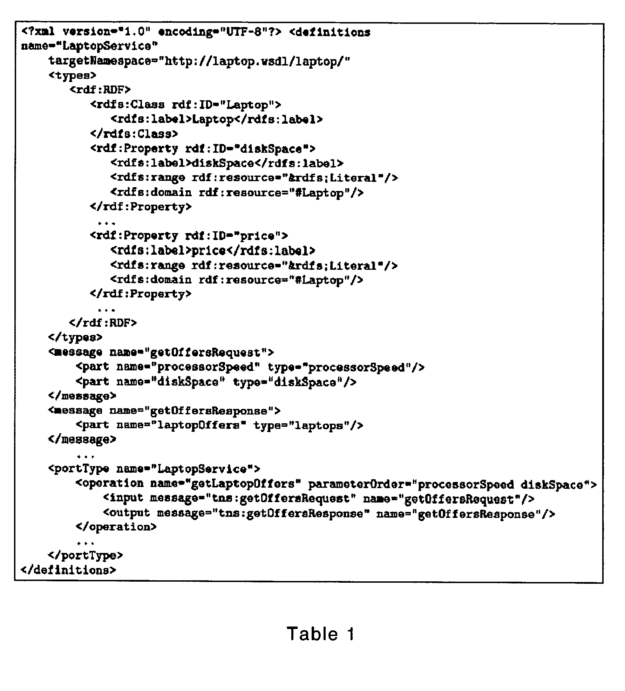

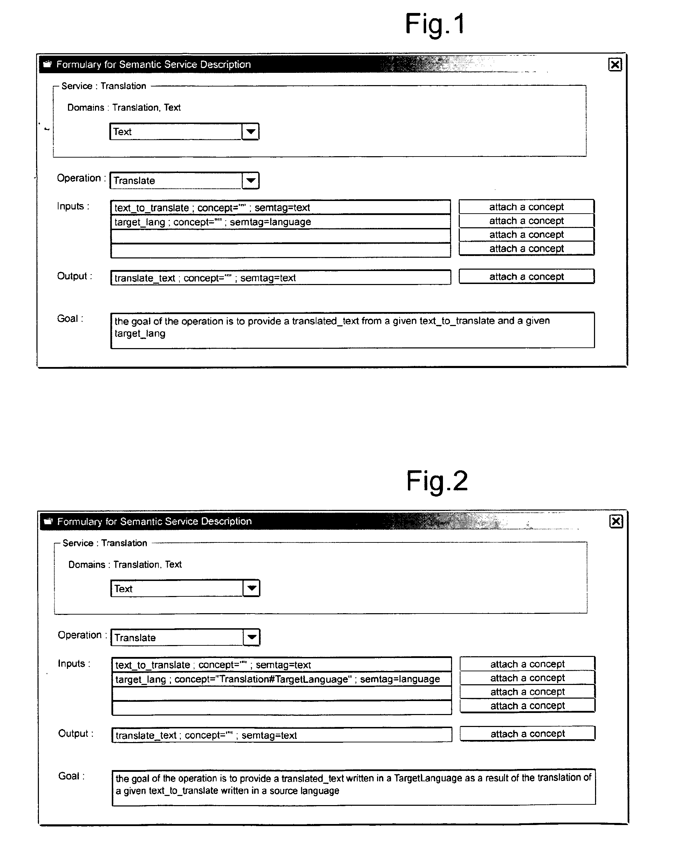

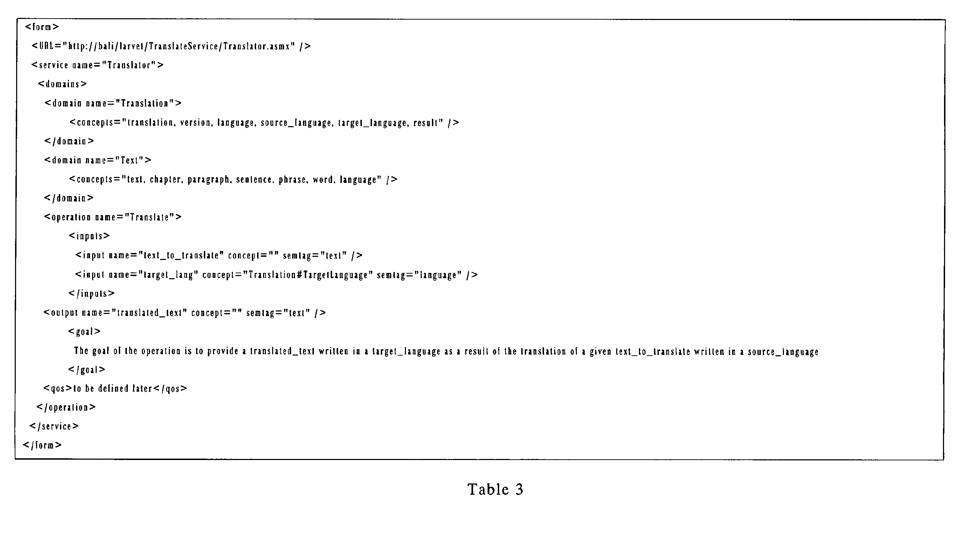

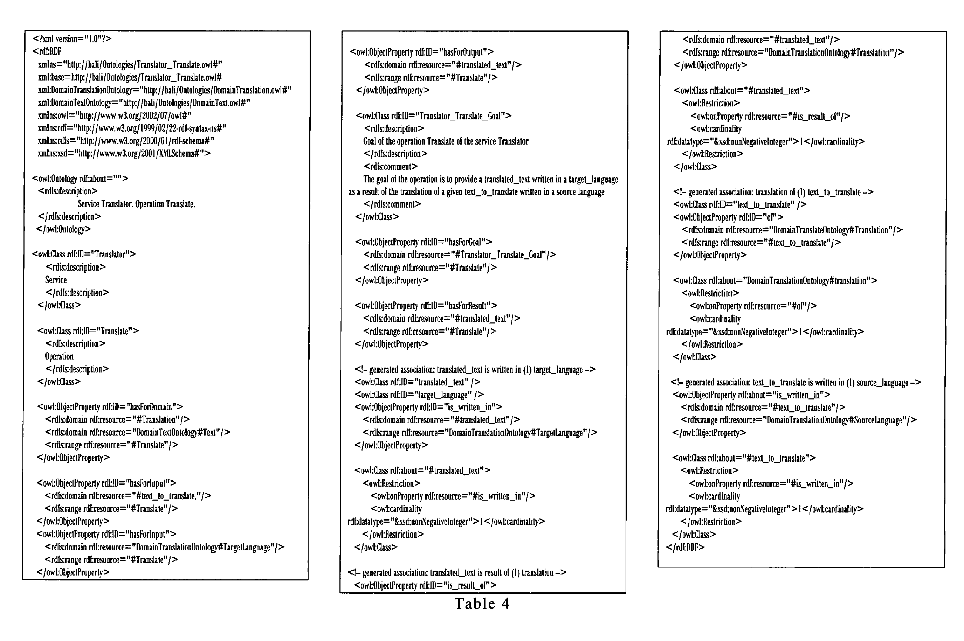

Figure 1 is an example of the formulary generated from WSDL.

In the illustrated example, the service is a translator service. From the operation name and the inputs and outputs of the service, the goal of the operation is automatically presented in one phrase "*the goal of the operation is to provide a translated_text from a given text_to_translate and a given target_lang*". The expression "a given xxx" denotes an input parameter. The expression "is to provide yyy" denotes the output parameter.

Then, in view of this formulary, the service developer makes annotations, as follows.

First, the service developer selects the semantic domain addressed by the service, by choosing domain names in a list. These domains are externally described by specific domain ontologies, where the concepts of the domain are defined and inter-related. These ontologies are not visible to the developer but can be used by him.

Secondly, the service developer attaches, if necessary, a concept of a domain to the input-output parameter, in order to precise the semantics of the data. This attachment is made, for example, by clicking on the formulary a button named "*attach a concept*" that allows the user to select a concept in a list of the terms that are defined in the domains.

Thirdly, if needed, the service developer modifies the operation goal to make it more precise. For expressing this goal, a good hint to the developer is to use the concepts defined in the selected domains. This has for advantage to depict a precise and non-ambiguous goal for the operation.

Figure 2 represents the formulary given in figure 1, after annotations being made by the service developer.

This formulary has an internal XML expression, given on Table 2. This formulation is transparent to the service developer.

From the completed formulary, a specific ontology of the service is generated. This generation is done using a specific generator that embeds generation patterns on two types of correspondence:
- correspondence between the data semantics in the formulary (domain name, operation name, input and output parameter names) and the OWL concepts;
- correspondences between natural languages simples constructs (complement of name with "of", structure of a long sentence seen as a set of short phrases, semantics of a short phrase seen as relationship between two concepts) and the OWL concepts.

Table 3 shows the generated ontology in OWL, corresponding to the formulary given on figure 2.

From the completed formulary and the original WSDL of the service, the SAWSDL of the service can be generated, embedding the appropriate references to the ontology, e.g. ontology of service for the description of the goal, ontologies of domains for the description of input-output parameters and for the definition of the concepts used in the goal description.

The invention is advantageous for various reasons. A service developer non expert in semantics can make deep annotations for a service. The service can be identified by semantic discovery mechanisms and automatic composition engines. There is no need for the service developer to know specific language such as OWL.

The generated semantic description SAWSDL can be immediately published into a specific directory, for example a UDDI directory, and the information of this publication can be pushed on the fly to the UDDI administrator terminal.

## Claims

1. Method for publishing a semantic service to a service registry, this method comprising retrieving a service description, parsing the description of the existing service to obtain raw data, these raw data comprising input and output parameters of the service; choosing at least one existing service ontology; selecting from said existing service ontology at least one semantic domain addressed by the existing service in view of the raw data; annotating the raw data using natural language, **characterized in that** it comprises generating of patterns based on the correspondence between the concepts of said service ontology and raw data semantics and also on the correspondence between the concepts of said service ontology and natural language used for annotating raw data, these patterns enabling the generation of a semantic service specification, generating a service registry publication request based on this semantic service specification, said semantic service specification containing the references of the chosen service ontology and the chosen semantic domain.

2. Method for deploying a semantic service according to claim 1, **characterized in that** parsing the description of the existing service is made using a WSDL parser.

3. Method for deploying a semantic service according to claim 1 or 2, **characterized in that** at least one concept of said domain is attached to an input or output parameter of the existing service.

4. Method for deploying a semantic service according to any one of the preceding claims, **characterized in that** parsing the description of the existing service generates at least one phrase in natural language presenting the goal of the existing service.

5. Method for deploying a semantic service according to claim 4, **characterized in that** the existing service is a Web service, the chosen ontology being based on a web ontology language such as OWL.

6. Method according to claim 5, **characterized in that** the registry is a universal description, discovery and integration registry (UDDI).

7. A computer program product comprising a computer usable medium having control logic stored therein for causing a computer to assist a user publishing a semantic service to a service registry, said control logic comprising :
- first computer readable program code for retrieving a service description;
- second computer readable program for parsing the description of the existing service to obtain raw data, these raw data comprising input and output parameters of the service;
- third computer readable program for choosing at least one existing service ontology;
- fourth computer readable program for selecting from said existing service ontology at least one semantic domain addressed by the existing service in view of the raw data;
- fifth computer readable program for annotating the raw data using natural language;
- sixth computer readable program for generating of patterns based on the correspondence between the concepts of said service ontology and raw data semantics and also on the correspondence between the concepts of said service ontology and natural language used for annotating raw data, these patterns enabling the generation of a semantic service specification,
- seventh computer readable program for generating publication request for the semantic service specification, said semantic service specification containing the references of the chosen service ontology and the chosen semantic domain.

8. Computer program product according to claim 7, **characterized in that** the existing service is a Web service, the chosen ontology being based on a web ontology language such as OWL.

9. A computer program product of claim 8, wherein the service registry is a universal description, discovery and integration registry (UDDI).

10. A communication system configured for invoking semantic services, said system including a computer of claim 7 to 9 and a distant web server including at least one service.
